# EUROPEAN PATENT APPLICATION

(11) **EP 2 696 243 A2**
(43) Date of publication of application: **12.02.2014**
(21) Application number: 13161432.3
(22) Date of filing: 27.03.2013
(51) Int. Cl.: G03B 21/60

(54) **Screen for front projection apparatus and fabrication method thereof**

(30) Priority: 06.08.2012 KR 20120085919
(71) Applicant: Samsung Electronics Co., Ltd, Gyeonggi-do 443-742 (KR)
(72) Inventor: Jeon, Wook-jae, Gyeonggi-do (KR); Lee, Won-yong, Gyeonggi-do (KR)
(74) Representative: Walaski, Jan Filip

(57) **Abstract**

A screen for a Fresnel type front projection apparatus is provided. The screen (100) includes a reflective layer (110) including a plurality of reflective protrusions (111) which project toward a front of the screen; each of the plurality of reflective protrusions (111) including a reflective surface (112) which forwardly reflects an image light (IL) projected from a projector (P); and an absorbing surface (113) which absorbs an external light (EL). The reflective surface (112) includes a first region (112a) on an inner side thereof on which a reflective coating is not formed and a second region (112b) on an outer side thereof on which the reflective coating (R) is formed.

## Description

The present invention relates to a screen for a front projection apparatus and a fabrication method thereof. More particularly, the present invention relates to a Fresnel type of screen for a front projection apparatus and a fabrication method thereof.

A projection apparatus includes a projector which projects an image of light and a screen to display the projected image of light. Projection apparatuses are generally classified into a front type in which the projector is disposed in front of the screen, and a rear type in which the projector is disposed behind the screen.

A Fresnel type screen may be used as the screen for the projection apparatus. The Fresnel type screen includes a Fresnel reflective layer. As the name implies, the Fresnel reflective layer has a Fresnel lens. In particular, the Fresnel reflective layer has a plurality of reflective protrusions. The reflective protrusions are generally configured to extend along concentric arcs. Each of the reflective protrusions has a reflective surface which reflects the image light and an absorbing surface which absorbs external light. A reflective material, such as aluminum, silver, etc., is generally coated on the reflective surface.

In a known method reflective protrusions of the Fresnel reflective layer are arranged in a manner so as to project rearward and are deposited on the reflective surface by the reflective materials, from the rear, so that the reflective materials are coated on the reflective surfaces of the reflective protrusions.

In the known reflective material coating method, some portions of an effective surface (a surface which the image light reaches) of the reflective surface may not be coated by the reflective material, and the absorbing surface may be unnecessarily coated by the reflective material. Due to this, reflection efficiency for the image light and absorptivity for the external light are reduced, resulting in a decrease in bright-room contrast.

The present invention has been developed in order to overcome the above drawbacks and other problems associated with the known arrangement. An aspect of the present invention is to provide an improved Fresnel type screen bright-room contrast compared to known screens, and a method of fabricating the same.

The above aspect and/or other feature of the present invention can be substantially achieved by providing a Fresnel type screen for a front projection apparatus, which may include a reflective layer including a plurality of reflective protrusions which project toward a front of the screen; each of the plurality of reflective protrusions including; a reflective surface which forwardly reflects an image light projected from a projector; and an absorbing surface which absorbs an external light; wherein the reflective surface comprises a first region of an inner side thereof on which a reflective coating is not formed and a second region of an outer side thereof on which the reflective coating is formed.

The absorbing surface may be arranged along a horizontal direction, and the reflective surface may be inclined with respect to the absorbing surface.

The plurality of reflective protrusions may be formed to extend along arcs having a common center.

The common center may be located at a point spaced a predetermined distance from a bottom edge of the screen.

The plurality of reflective protrusions may be formed to extend along horizontal straight lines that are parallel to each other.

The screen for a front projection apparatus may include a light absorption layer disposed behind the reflective layer.

The screen for a front projection apparatus may include a diffusion layer disposed in front of the reflective layer.

The screen for a front projection apparatus may include a light transmission layer disposed between the diffusion layer and the reflective layer.

According to another aspect of the present invention, a method of fabricating a screen for a front projection apparatus may include forming a reflective layer that includes a plurality of reflective protrusions which project toward a front of the screen, each of the reflective protrusions including a reflective surface which forwardly reflects an image light projected from a projector and an absorbing surface which absorbs external light; and forming a reflective material on the reflective surface so that a reflective coating is not formed on a first region of an inner side thereof, and the reflective coating is formed on a second region of an outer side thereof.

In forming a reflective material on the reflective surface, the reflective coating may be formed by a deposition process that is performed by using a deposition source arranged in front of the reflective layer.

Reflective coating materials facing from the deposition source to the reflective layer may have moving directions inclined with respect to a horizontal plane.

The deposition source may be disposed below a bottom edge of the reflective layer.

When the screen is used, the deposition source may be disposed at a location which corresponds to where a projector is disposed.

A thermal evaporation process may be applied as the deposition process.

The reflective coating materials facing from the deposition source to the reflective layer may be placed at a certain slope with respect to the horizontal.

A sputtering process may be applied as the deposition process.

The forming a reflective layer may include filling a UV resin between a transparent base sheet and a mold; and irradiating ultraviolet rays onto the UV resin.

The fabricating method for a screen for a front projection apparatus may include forming a diffusion layer in front of the reflective layer.

The forming a diffusion layer may include arranging a diffusion sheet which functions as the diffusion layer in front of the reflective layer; filling a UV resin between the diffusion sheet and the reflective layer; and irradiating ultraviolet rays on the UV resin so as to form a light transmission layer.

The method of fabricating a screen for a front projection apparatus may include forming a light absorption layer behind the reflective layer.

Other objects, advantages and salient features of the present invention will become apparent from the following detailed description, which, taken in conjunction with the annexed drawings, discloses exemplary embodiments.

These and/or other aspects and advantages of the present invention will become apparent and more readily appreciated from the following description of the exemplary embodiments, taken in conjunction with the accompanying drawings of which:
FIG. 1 is a side view illustrating a screen for a front projection apparatus according to an exemplary embodiment of the present invention and a projector that projects an image light on the screen;
FIG. 2 is a front view illustrating the screen as illustrated in FIG. 1;
FIG. 3 is a front view illustrating an alternative exemplary embodiment of the screen as illustrated in FIG. 2;
FIG. 4 is a partially sectional view illustrating the screen as illustrated in FIG. 2 taken along a line of IV-IV in FIG. 2;
FIG. 5 is a sectional view for explaining image light reflection and external light absorption by the screen of FIG. 4;
FIGS. 6 to 10 are views for explaining a method of fabricating a screen for a projection apparatus according to an exemplary embodiment of the present invention. FIGS. 6, 7, 9, and 10 are sectional views sequentially illustrating detailed processes of the fabrication method, and FIG. 8 is a sectional view illustrating an alternative fabrication method from the process of FIG. 7; and
FIG. 11 is a sectional view illustrating a known screen of the related art for a front projection apparatus and a reflective coating deposition process that is applied when the screen is fabricated.

Throughout the drawings, like reference numerals will be understood to refer to like parts, components and structures.

Hereinafter, certain exemplary embodiments of the present invention will be described in detail with reference to the accompanying drawings.

The matters defined herein, such as a detailed construction and elements thereof, are provided to assist in a comprehensive understanding of this description. Thus, it is apparent that exemplary embodiments may be carried out without those defined matters. Also, well-known functions or constructions are omitted to provide a clear and concise description of exemplary embodiments as well as to avoid obscuring the present invention. Further, dimensions of various elements in the accompanying drawings may be arbitrarily increased or decreased for assisting in a comprehensive understanding of the exemplary embodiments.

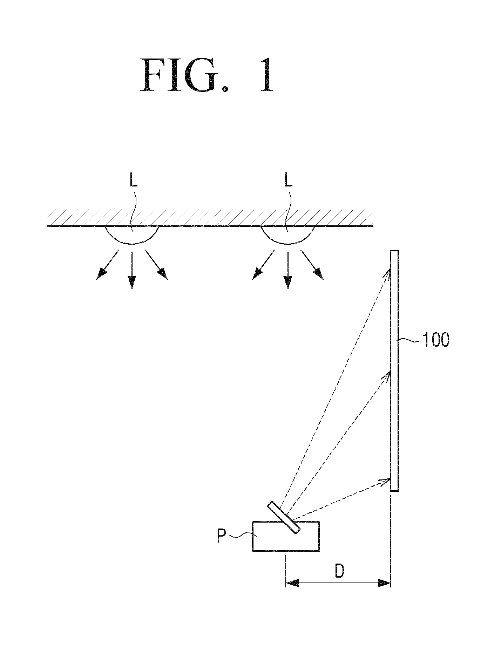

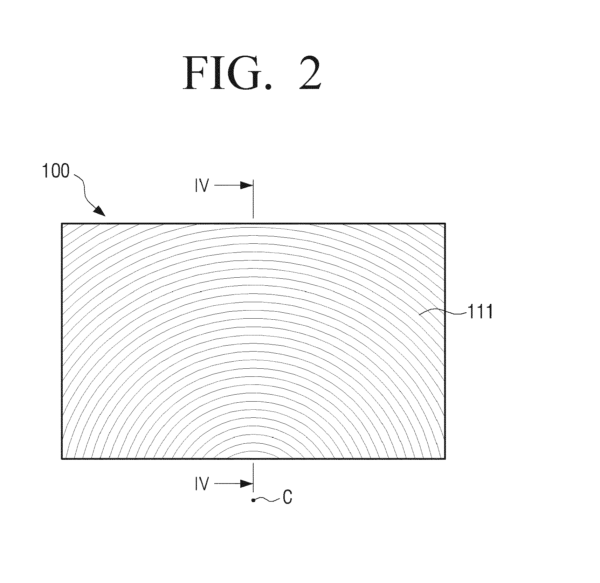

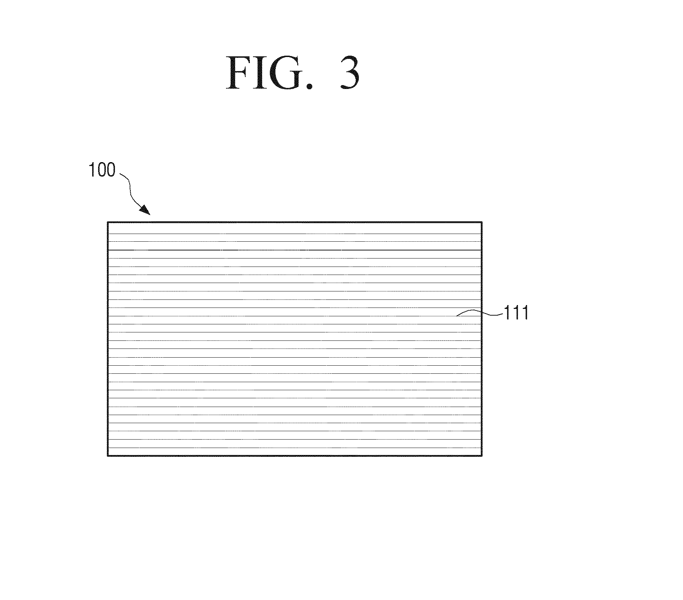

FIG. 1 is a side view illustrating a screen for a front projection apparatus according to an exemplary embodiment of the present invention and a projector that projects an image light on the screen. FIG. 2 is a front view illustrating the screen as illustrated in FIG. 1, and FIG. 3 is a front view illustrating an alternative exemplary embodiment of the screen as illustrated in FIG. 1.

Referring to FIG. 1, a screen 100 for a front projection apparatus according to an exemplary embodiment of the present invention forms the front projection apparatus along with a projector P disposed in front of the screen. The projection apparatus of which the projector P is arranged in front of the screen 100 is often referred to as a front type projector, and is distinguished from a rear type of projector which would be arranged behind the screen 100. The screen 100 forwardly reflects an image light projected from the projector P, that is, toward viewers, thereby displaying images for the viewers.

As illustrated in FIG. 1, a distance D between the projector P and the screen 100 is fairly short. The projection apparatus of which the distance D between the projector P and the screen 100 is fairly short is generally referred to as a 'short-focus' projection apparatus. The short-focus projection apparatus is more likely to have uneven brightness and reduced contrast compared to normal projection apparatuses. Accordingly, the short-focus projection apparatus desperately requires improved uniformity of brightness and contrast. In the exemplary embodiments, the short-focus projection apparatus is disclosed as one example. However, this is only one example. It should be noted that the screen according to an exemplary embodiment of the present invention can be applied to other projection apparatuses besides the short-focus projection apparatus.

As illustrated in FIG. 1, the screen 100 can be used in an environment in which external lights emitting from indoor lighting devices, such as overhead lights L, are incident on the screen 100. Such an environment is referred to as a bright room environment. When used in the bright room environment, it is important that the external light incident on the screen 100 is not allowed to be reflected on the screen 100 toward the viewers. This is particularly important with respect to contrast.

As illustrated in FIG. 2, the screen 100 is provided with a plurality of reflective protrusions 111 formed thereon in order to increase the efficiency of reflection of the image light, as well as the absorptivity for the external light. Each of the plurality of reflective protrusions 111 includes a reflective surface which reflects the image light and an absorbing surface which absorbs the external light. Detailed descriptions thereof will be described, hereinafter. The screen having such reflective protrusions 111 may be referred to as a Fresnel type screen.

As illustrated in FIG. 2, the plurality of reflective protrusions 111 are configured to extend along a plurality of arcs having a common center C. Here, the common center C is located at a point spaced a predetermined distance from a bottom edge of the screen 100. As illustrated in FIG. 3, the plurality of reflective protrusions 111 may be formed to extend along horizontal straight lines with approximately equal intervals.

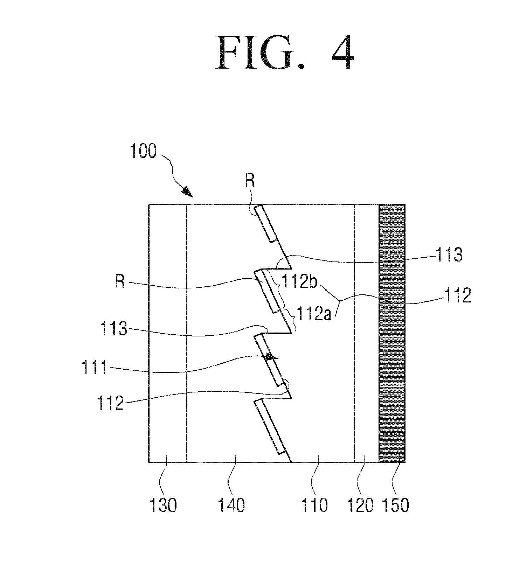

The screen 100 for the front projection apparatus as described above will be described in more detail with reference to FIG. 4. FIG. 4 is a partial sectional view illustrating the screen as illustrated in FIG. 2, taken along line IV-IV in FIG. 2.

Referring to FIG. 4, the screen 100 for the front projection apparatus according to an exemplary embodiment includes a Fresnel reflective layer 110, a base sheet 120, a diffusion sheet 130, a light transmission layer 140, and a light absorption layer 150.

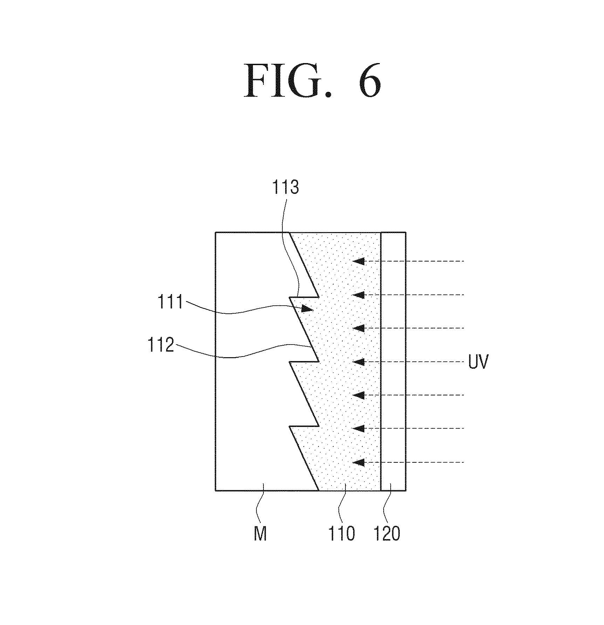

The plurality of reflective protrusions 111 as described above are formed on a front surface of the Fresnel reflective layer 110 and a rear surface of the Fresnel reflective layer 110 is supported by the base sheet 120. The Fresnel reflective layer 110 may have a transparent material. For example, the Fresnel reflective layer 110 may be implemented as a UV resin that is filled between a mold M (see FIG. 6) and the pre-prepared base sheet 120. The Fresnel reflective layer 110 may be cured by ultraviolet rays.

Each of the plurality of reflective protrusions 111 provided on the front surface of the Fresnel reflective layer 110 includes a reflective surface 112 which reflects the image light and an absorbing surface 113 which absorbs the external light. Referring to FIG. 4, the absorbing surfaces 113 are arranged in a horizontal direction, and the reflective surfaces 112 are arranged to be inclined with respect to the absorbing surfaces 113. An angle formed by the reflective surface 112 and the absorbing surface 113 is an acute angle. A reflective surface 112 of one of the plurality of reflective protrusions 111 is connected to an absorbing surface 113 of another reflective protrusion 111 directly below the reflective protrusion 111, and the absorbing surface 113 of the reflective protrusion 111 is connected to a reflective surface 112 of still another reflective protrusion 111 directly above the reflective protrusion 111.

A reflective coating R for reflecting the image light is formed on the reflective surface 112 of the reflective protrusion 111. Aluminum, silver, etc. having high reflectivity may be used as a reflective coating material. The reflective coating R may be formed by a deposition process, etc., and a detailed explanation of the deposition process will be described hereinafter. As illustrated in FIG. 4, the reflective coating R is not at all formed on the absorbing surface 113. In particular, the reflective coating R is not formed on a first region 112a of an inner side of the reflective surface 112, but is formed on the other region of the reflective surface 112, namely, on a second region 112b of an outer side of the reflective surface 112.

The base sheet 120 is arranged behind the reflective layer 110 and supports the reflective layer 110. The base sheet 120 may have a transparent material. For example, the base sheet 120 may be fabricated of a polyethylene terephthalate (PET).

The diffusion sheet 130 is arranged in front of the reflective layer 110, and may have a diffusion structure of a separate diffusion material which diffuses the image light within the diffusion sheet 130.

The light transmission layer 140 is arranged between the diffusion sheet 130 and the reflective layer 110 and covers the plurality of reflective protrusions 111 of the reflective layer 110. The light transmission layer 140 may be fabricated of the same material as the reflective layer 110. For example, the light transmission layer 140 may be formed by using UV resin as a raw material and curing the UV resin by using ultraviolet rays.

Alternatively, in another exemplary embodiment, instead of the diffusion sheet 130, the light transmission layer 140 may have a light diffusion function. In other words, the diffusion sheet 130 does not have the light diffusion structure or the light diffusion material, but instead, the light transmission layer 140 may have the light diffusion structure or the light diffusion material. In this situation, because the diffusion sheet 130 does not have a light diffusion function, it is simply a base sheet for supporting the light transmission layer 140.

The light absorption layer 150 is arranged behind the reflective layer 110. In particular, the Fresnel reflective layer 110 is formed on the rear surface of the base sheet 120. The light absorption layer 150 may be implemented with a black color having high light absorptance. For example, the light absorption layer 150 may be formed by the printing or spraying black ink. Alternatively, the light absorption layer 150 may be formed by bonding a black sheet.

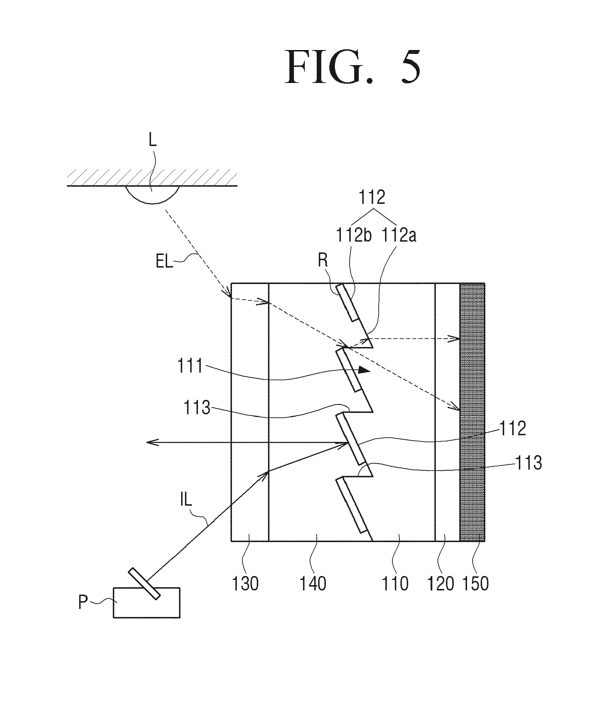

FIG. 5 is a sectional view for explaining image light reflection and external light absorption by the screen 100 of FIG. 4. The image light reflection and external light absorption by the above-described screen 100 will be described as follows with reference to FIG. 4.

An image light IL that is projected from the projector P in front of the screen 100 passes through the diffusion sheet 130 and the light transmission layer 140, is incident on the reflective surface 112 of the Fresnel reflective layer 110, and is reflected in front of the screen 100 by the reflective coating R formed in the second region 112b of the outer side of the reflective surface 112.

As described above, the reflective coating R is not formed on the first region 112a of the inner side of the reflective surface 112. As can be understood from FIG. 5, it is difficult for image light IL to reach the first region 112a of the reflective surface 112 due to a shield effect by the lower reflective protrusion 111. Even when the image IL reaches the first region 112a, the amount of image received in first region 112a is very small. The second region 112b of the reflective surface 112 is an area which the image light IL can reach, and the first region 112a of the reflective surface 112 is an area which the image light IL cannot reach. In this sense, the second region 112b corresponds to an effective region, and the first region 112a corresponds to a non-effective region.

In this exemplary embodiment, the reflective coating R is not formed over the entire reflective surface 112, but rather is only formed on the second region 112b of the reflective surface 112. However, since the second region 112b is the effective region actually receiving the incident image light IL, the reflection efficiency does not deteriorate for the image light IL.

On the other hand, the external light EL entering from indoor lighting devices such as overhead lights L and passing through the diffusion sheet 130 and the light transmission layer 140, reaches the reflective layer 110. The external light EL which reaches reflective layer 110 flows into the inside of the reflective layer 110 through the absorbing surfaces 113, passes through the base sheet 120, and is absorbed by the last light absorption layer 150. Some of the external light EL that reaches the reflective layer 110 may be reflected by the absorbing surface 113, and the reflected external light EL flows into the inside of the reflective layer 110 through the first region (non-effective area) 112a of the reflective surface 112, and is absorbed by the light absorption layer 150. As described above, the first region 112a of the reflective surface 112 without the reflective coating R may act as an auxiliary region to the absorption of the external light.

A fabricating method of the screen 100 for the above-described front projection apparatus will be described in detail with reference to FIGS. 6 to 10.

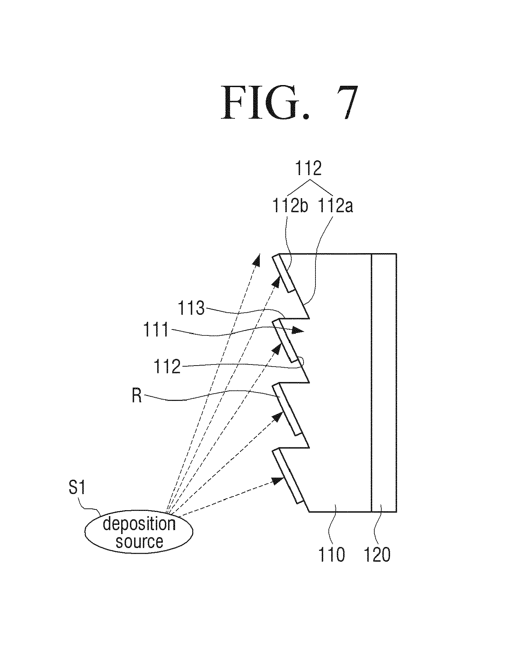

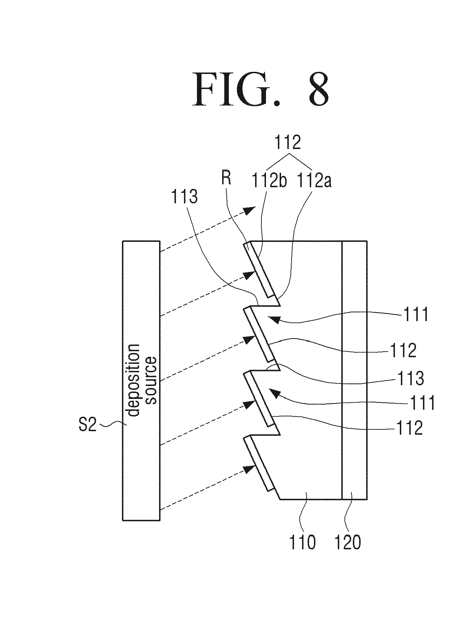

FIGS. 6 to 10 are views for explaining a fabricating method of a screen for a projection apparatus according to an exemplary embodiment of the present invention, FIGS. 6, 7, 9, and 10 are sectional views sequentially illustrating detailed processes of the fabricating method, and FIG. 8 is a sectional view illustrating an alternative fabrication method to the process of FIG. 7.

As illustrated in FIG. 6, after a UV resin that is a raw material of the reflective layer 110 is filled between the base sheet 120 of a transparent material and the mold M, the ultraviolet ray is irradiated from the rear of the base sheet 120 to cure the UV resin, thereby forming the reflective layer 110. Here, the mold M has a complementary shape with respect to the reflective protrusions 111 of the reflective layer 110 in order to form the Fresnel reflective layer 110. Accordingly, the front surface of the molded Fresnel reflective layer 110 is provided with the reflective protrusions 111 having the reflective surface 112 and the absorbing surface 113.

Next, as illustrated in FIG. 7, the reflective coating R is formed on the reflective protrusions 111 of the reflective layer 110 by a deposition process. A material having high reflectivity, such as aluminum, silver, etc., may be applied to the reflective coating R. The deposition source S1 is disposed in front of the reflective layer 110 and below the bottom edge of the reflective layer 110. The deposition source S1 may be disposed at a location corresponding to the position at which the projector P is disposed in FIG. 1. When the deposition source S1 is disposed in such a position, thermal evaporation may be applied to as the deposition process.

As illustrated in FIG. 7, according to the deposition process of this exemplary embodiment, the reflective coating materials move to the reflective layer 110 in a direction inclined with respect to the horizontal. When forming the reflective coating R as described above, it is advantageous to use the inclined deposition process. This is because the inclined deposition process can form the reflective coating R on the reflective surface 112 of the reflective protrusion 111, and can prevent the reflective coating R from being formed on the absorbing surface 113 of the reflective protrusion 111. Also, by the inclined deposition process, the reflective coating R is formed on the effective region, i.e., the second region 112b, which the image light IL can reach the reflective surface 112, but is not formed on the non-effective region (the first region 112a) which the image light IL does not reach.

In response to the deposition source S1 being disposed at the location which corresponds to the installation location of the projector P, the area on which the reflective coating R is formed may substantially match the effective region 112b of the reflective surface 112. Accordingly, when the inclined deposition, particularly, the inclined deposition by thermal evaporation is used, the deposition source S1 may be disposed at or near a location which corresponds to the installation location of the projector P.

In the deposition process as illustrated in FIG. 7, the reflective coating materials are fired towards the reflective layer 110 in a radial direction. Alternatively, a deposition process as illustrated in FIG. 8 uses the inclined deposition, but fires the reflective coating materials from a deposition source S2 toward the reflective layer 110 in an inclined direction of a constant angle. Sputtering may be used as the deposition process according to FIG. 8. The deposition source S2 formed in a plate shape may be used. At this time, the deposition source S2 is arranged in front of the screen 100 like the above-described deposition source S1, but does not need to be arranged under the bottom end of the screen 100.

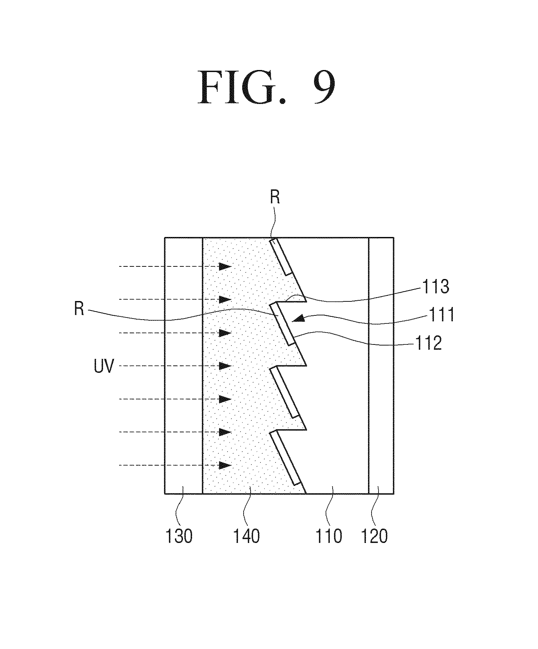

Next, a step of forming the diffusion layer in front of the reflective layer 110 proceeds. This step, as illustrated in FIG. 9, may be performed by arranging the diffusion sheet 130 having the diffusion structure or diffusion material in front of the reflective layer 110, filling an UV resin between them, and irradiating the ultraviolet rays on the UV resin. As a result, the UV resin is cured so as to become a transparent light transmission layer 140. Attaching the diffusion sheet 130 onto the light transmission layer 140 is achieved with this process. In this case, the diffusion sheet 130 functions as the diffusion layer.

Alternatively, it is possible that instead of using the diffusion sheet 130, a general base sheet that does not have the diffusion-function may be used and a diffusion material is mixed to the UV resin. In the case of the alternative construction, the light transmission layer 140 may function as the diffusion layer.

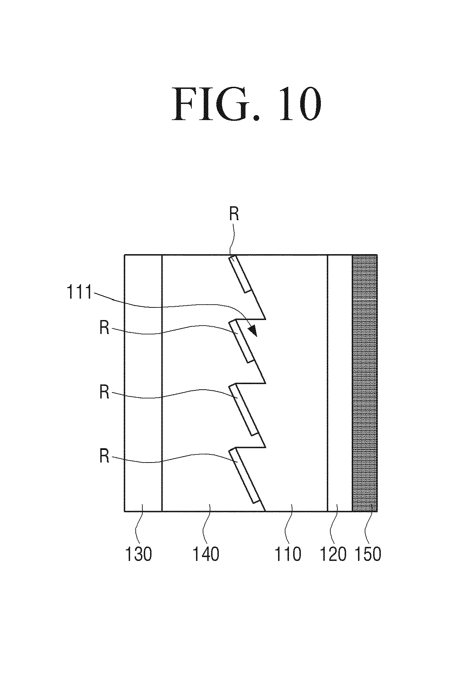

Finally, as illustrated in FIG. 10, the light absorption layer 150 is formed behind the reflective layer 110. In particular, the light absorption layer 150 is formed behind the base sheet 120. The light absorption layer 150 may have a black color with high absorptivity. For example, the light absorption layer 150 may be formed by coating black ink using either a printing process or a spray process. Alternatively, the light absorption layer 150 may be formed by attaching a black sheet onto the rear surface of the base sheet 120.

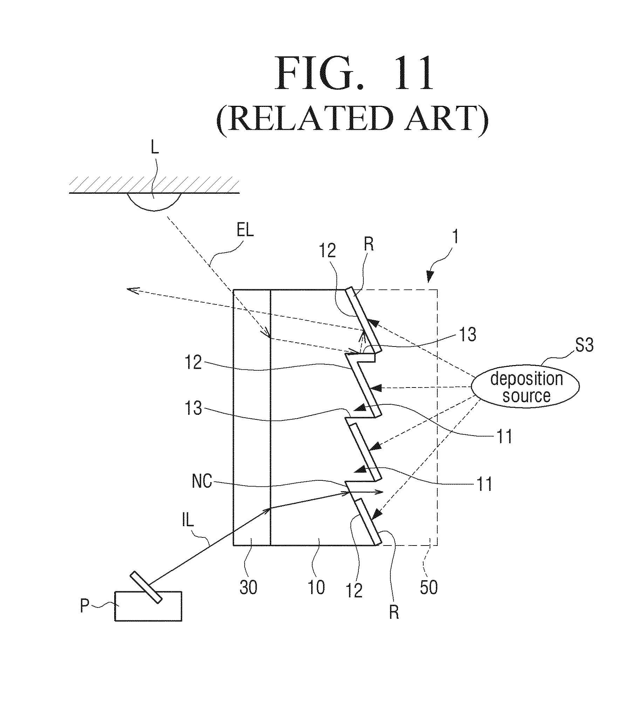

FIG. 11 is a sectional view illustrating a known screen for a front projection apparatus and a reflective coating deposition process that is applied when the screen is fabricated. The advantages of the method of fabricating a screen according to the present invention as described above will be disclosed with reference to FIG. 11.

Referring to FIG. 11, the known screen 1 for the front projection apparatus includes a reflective layer 10, a diffusion layer 30, and a light absorption layer 50. The reflective layer 10 is a Fresnel reflective layer, and has a plurality of reflective protrusions 11 on the rear surface thereof. Each of the plurality of reflective protrusions 11 has a reflective surface 12 and an absorbing surface 13, and a reflective coating R is formed on the reflective protrusion 11.

The method of fabricating the known screen 1 is performed in the order of forming the reflective layer 10 and the diffusion layer 30, forming the reflective coating R by the deposition process, and forming the light absorption layer 50.

Here, the forming the reflective coating R, as illustrated in FIG. 11, is performed by arranging a deposition source S3 behind the reflective layer 10 and firing radially reflective coating materials thereto. Similarly, in the known fabrication method, forming the reflective coating R uses a rear deposition method. With reference to FIG. 11, it may be understood that due to the rear deposition method, the reflective coating R is formed on some of the absorbing surfaces 13 of the reflective layer 10. Also, with reference to FIG. 11, according to the rear deposition method, due to the shield effect of neighboring reflective protrusions 11, non-coated portions NC on which the reflective coating R is not formed may be generated among effective regions of the reflective surface 12.

According to the known method of fabricating a screen as described above, absorption rate of the external light is not only reduced because of the absorbing surfaces 13 on which the reflective coating R is formed, but reflection efficiency of the image light may be decreased due to the non-coated portions NC generated in the effective regions of the reflective surface 12 as well.

On the other hand, as described above, with the screen fabricating method according to an exemplary embodiment of the present invention, because the front inclined deposition method is used, the reflective coating R is not formed on the absorbing surfaces 113 of the reflective layer 110 and there are no non-coated portions on the effective regions 112b of the reflective surfaces 112 of the reflective layer 110.

Accordingly, with the screen fabricating method according to an exemplary embodiment of the present disclosure compared to the known technology, there is an improvement in the absorption rate of the external light and reflection efficiency of the image light, a screen for a front projection apparatus having improved contrast.

While the exemplary embodiments have been described, additional variations and modifications of the exemplary embodiments may occur to those skilled in the art once they learn of the basic present invention. Therefore, it is intended that the appended claims shall be construed to include both the above exemplary embodiments and that all such variations and modifications that fall within the scope of the present invention.

## Claims

1. A screen for a Fresnel type front projection apparatus, the screen comprising:
a reflective layer comprising a plurality of reflective protrusions projecting towards the front of the screen, each of the plurality of reflective protrusions comprising:
a reflective surface for reflecting an image light projected from a projector forward; and
an absorbing surface for absorbing an external light, wherein the reflective surface comprises a first region of an inner side thereof on which a reflective coating is not formed and a second region of an outer side thereof on which a reflective coating is formed.

2. The screen for a Fresnel type front projection apparatus of claim 1, wherein the absorbing surface is arranged along a horizontal direction, and the reflective surface is arranged inclined with respect to the absorbing surface.

3. The screen for a Fresnel type front projection apparatus of claim 1 or 2, wherein the plurality of reflective protrusions are formed to extend along arcs having a common center.

4. The screen for a Fresnel type front projection apparatus of claim 1 or 2, wherein the plurality of reflective protrusions are formed to extend along horizontal straight lines that are parallel to each other.

5. The screen for a Fresnel type front projection apparatus of any one of the preceding claims, further comprising a light absorption layer disposed behind the reflective layer.

6. The screen for a Fresnel type front projection apparatus of any one of the preceding claims, further comprising a diffusion layer disposed in front of the reflective layer.

7. The screen for a Fresnel type front projection apparatus of claim 6, further comprising a light transmission layer disposed between the diffusion layer and the reflective layer.

8. A method of fabricating a screen for a front projection apparatus, the method comprising:
forming a reflective layer that comprises a plurality of reflective protrusions projecting towards the front of the screen, each of the reflective protrusions comprising a reflective surface for reflecting an image light projected from a projector forward and an absorbing surface for absorbing an external light; and
forming a reflective material on the reflective surface so that a reflective coating is not formed on a first region of an inner side thereof and a reflective coating is formed on a second region of an outer side thereof.

9. The fabricating method for a screen for a front projection apparatus of claim 8, wherein in the forming a reflective material on the reflective surface, the reflective coating is formed by a deposition process that is performed by using a deposition source arranged in front of the reflective layer.

10. The fabricating method for a screen for a front projection apparatus of claim 9, wherein reflective coating materials facing from the deposition source to the reflective layer have moving directions inclined with respect to a horizontal.

11. The fabricating method for a screen for a front projection apparatus of claim 10, wherein the deposition source is disposed below a bottom end of the reflective layer.

12. The fabricating method for a screen for a front projection apparatus of claim 11, wherein the deposition source is disposed at a location corresponding to where a projector is disposed when the screen is used.

13. The fabricating method for a screen for a front projection apparatus of claim 10, wherein the reflective coating materials facing from the deposition source to the reflective layer move with a certain slope with respect to the horizontal.

14. The fabricating method for a screen for a front projection apparatus of any one of the preceding claims, further comprising forming a diffusion layer in front of the reflective layer.

15. The fabricating method for a screen for a front projection apparatus of any one of the preceding claims, further comprising forming a light absorption layer behind the reflective layer.
